# EUROPÄISCHE PATENTSCHRIFT

(11) **EP 4 307 058 B1**
(45) Veröffentlichungstag und Bekanntmachung des Hinweises auf die Patenterteilung: **28.10.2026**
(21) Anmeldenummer: 23178693.0
(22) Anmeldetag: 12.06.2023
(51) Int. Cl.: G05B 19/042

(54) **STATION ZUM EINSATZ IN EINEM FELDNETZ ZWISCHEN EINEM ODER MEHREREN FELDGERÄTEN UND EINER ZENTRALEINHEIT SOWIE IN EINEN MODULTRÄGER AUSWECHSELBAR EINSTECKBARES SWITCH-MODUL**
STATION FOR USE IN A FIELD NETWORK BETWEEN ONE OR MORE FIELD DEVICES AND A CENTRAL UNIT AND SWITCH MODULE THAT CAN BE INSERTED INTO A MODULE CARRIER IN AN EXCHANGEABLE MANNER
STATION DESTINÉE À ÊTRE UTILISÉE DANS UN RÉSEAU DE TERRAIN ENTRE UN OU PLUSIEURS APPAREILS DE TERRAIN ET UNE UNITÉ CENTRALE AINSI QUE MODULE DE COMMUTATION ENFICHABLE AMOVIBLE DANS UN SUPPORT DE MODULE

(30) Priorität: 15.07.2022 DE 102022117693
(43) Veröffentlichungstag der Anmeldung: 17.01.2024
(73) Patentinhaber: Turck Holding GmbH, 58553 Halver (DE)
(72) Erfinder: Bibernell, Werner, 45470 Mülheim (DE); Gabrysch, Adalbert, 46286 Dorsten (DE)
(74) Vertreter: DTS Patent- und Rechtsanwälte PartmbB

(56) Entgegenhaltungen:
- WO-A1-2022/038147
- DE-A1- 102019 127 195
- ANONYMOUS: "Excom I/O-System für Ex- und Nicht-Ex-Bereiche", TURCK, 31 May 2021 (2021-05-31), pages 1 - 20, XP093060013, Retrieved from the Internet <URL:https://www.turck.de/attachment/d300149.pdf> [retrieved on 20230703]

## Beschreibung

Die vorliegende Erfindung liegt im Bereich des industriellen Internets der Dinge, insbesondere im Bereich einer Ethernet-Kommunikationstechnologie, die speziell für die Anforderungen in der Prozessindustrie entwickelt wurde. Die Erfindung betrifft eine Station zum Einsatz in einem Feldnetz zwischen zumindest einem Feldgerät und einer Zentraleinheit, wobei die Station einen Modulträger und darauf auswechselbar einsteckbare Module aufweist, wobei die Module zumindest ein Switch-Modul umfassen, an welches das zumindest eine Feldgerät anschließbar ist, und wobei die Module zusätzlich zumindest ein oder zwei Leistungsversorgungsmodule umfassen.

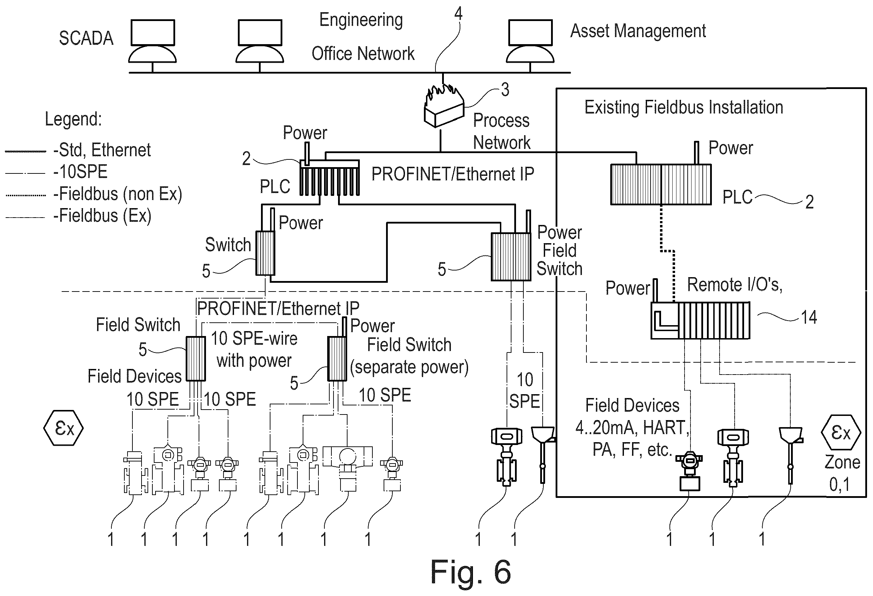

Ein genereller Überblick eines Systems zur Steuerung von sogenannten Feldgeräten im Bereich der Prozessautomatisierung ist in Fig. 6 dargestellt.

Mit Bezugszeichen 1 sind sogenannte Feldgeräte ("Field Devices") bezeichnet. Feldgeräte können beispielsweise Sensoren und/oder Aktuatoren in der Automatisierungstechnik sein, die verschiedene Protokolle verwenden (4..20mA, HART, PA, FF, etc.). Diese Feldgeräte sind mit an sich bekannten Maßnahmen mit sogenannten speicherprogrammierten Steuerungen, sogenannten PLCs 2, verbunden, etwa mittels "10 SPE". Diese können eine Stromversorgung ("Power") aufweisen. Die Steuerung der beziehungsweise die Kommunikation mit den Feldgeräten 1 geschieht üblicherweise über einen Ethernet-Standard. Die speicherprogrammierbare Steuerung 2 kann beispielsweise, wie in Fig. 6 dargestellt, über ein Arbeitsnetzwerk (hier: "Process Network"; verwendet etwa "PROFINET/Ethernet IP") über eine Firewall 3 an ein Betriebsnetzwerk 4 (hier: "Office Network" mit den schematisch gezeigten angeschlossenen Teilen "SCADA", "Engineering", "Asset Management")angeschlossen sein. Die Feldgeräte 1 sind über sogenannte Switches 5 ("Switch", "Field Switch"; mit Spannungsversorgung über "10 SPE 2-wire with power" oder separat "Power",) mit der speicherprogrammierten Steuerung 2 verbunden. In der Konfiguration in Fig. 6 sind unterschiedliche Arten von Switches dargestellt, die an verschiedenen Positionen im Netzwerk vorgesehen sind.

In Fig. 6 auf der unteren Seite sind die sogenannte Ex-Zone 0 und Ex-Zone 1 dargestellt, abgegrenzt durch eine gestrichelte Linie.

Die verschiedenen Typen von Ex-Zonen werden dabei typischerweise gemäß den entsprechenden gesetzlichen Vorschriften verstanden.

Hierbei zählt zur Ex-Zone 0 ein Bereich, in dem ständig oder langzeitig eine explosionsfähige Atmosphäre aus einem Gemisch von Luft mit brennbaren Substanzen in Form von Gas, Dampf oder Nebel vorhanden ist. Die Ex-Zone 1 ist ein Bereich, in dem damit zu rechnen ist, dass eine explosionsfähige Atmosphäre aus einem Gemisch von Luft mit brennbaren Substanzen in Form von Gas, Dampf oder Nebel bei normalem Betrieb auftritt. Die Ex-Zone 2 ist ein Bereich, in dem nicht damit zu rechnen ist, dass bei normalem Betrieb eine explosionsfähige Atmosphäre aus einem Gemisch von Luft mit brennbaren Substanzen in Form von Gas, Dampf oder Nebel auftritt, und wenn, dann nur selten und auch nur kurzzeitig. Insbesondere sind bei einem Betrieb in Ex-Zone 0 und 1 besondere Anforderungen an die Komponenten zu erfüllen, um beispielsweise eine Entstehung von Funken zwischen zwei Stromleitungen zu verhindern. So dürfen beispielsweise bestimmte Spannungen, die an den Zuführungsleitungen anliegen, nicht überschritten werden. Auch andere Anforderungen sind durch die Klassifizierung als "Ex-Zone 0 geeignet" beziehungsweise" Ex-Zone 1 geeignet" einzuhalten. Komponenten, die diese Voraussetzungen erfüllen, werden auch als "eigensicher" bezeichnet.

Weiterer relevanter Stand der Technik ist in folgenden Dokumenten beschrieben:
DE 10 2019 127195 A1, WO 2022/038147 A1.

Die vorliegende Erfindung beschäftigt sich insbesondere mit einer Station zum Einsatz in einem Feldnetz zwischen einem oder mehreren Feldgeräten und einer Zentraleinheit. Diese Zentraleinheit kann die zuvor genannte speicherprogrammierte Steuerung sein. Solche Stationen, die zwischen einer solchen Zentraleinheit und den Feldgeräten geschaltet sind, sind allgemein bekannt.

Beispielsweise beschreibt die WO 2020/233087 A1 einen sogenannten Feldverteiler, der ein Beispiel einer solchen Station ist. In diesen Feldverteiler werden über eine Eingangsbaugruppe die Steuerungssignale mit einer übergeordneten Zentraleinheit ausgetauscht. Daran ist ein sogenannter Multiplexer angeschlossen, der mit mehreren Ausgangsbaugruppen verbunden ist. An jede dieser Ausgangsbaugruppen kann ein entsprechendes Feldgerät angeschlossen werden.

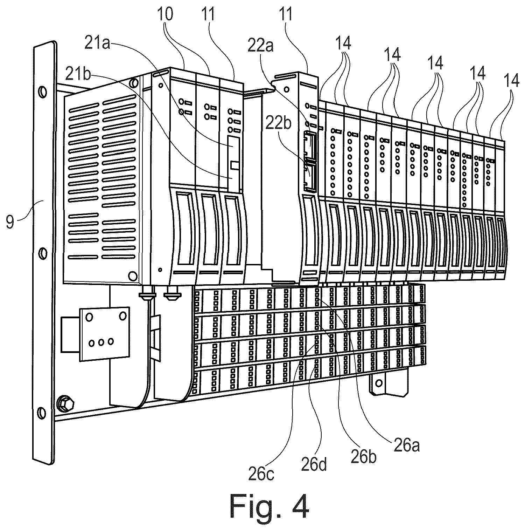

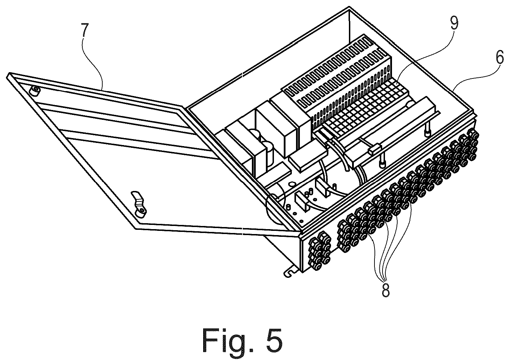

Ein weiteres bekanntes System, bei dem eine solche Station vorhanden ist, ist aus der EP 1 014 531 A2 bekannt. Dort ist als Beispiel für eine solche Station ein Signalwandler vorgesehen, der zwischen den Feldgeräten und der Zentraleinheit eingefügt ist. Die dort beschriebene Anordnung entspricht im Wesentlichen der in Fig. 4 und 5 dargestellten Anordnung. Die Station weist, wie in Fig. 5 zu sehen, ein Metallgehäuse 6 auf, das mit einer Zugangsklappe 7 versehen ist. An einer Unterseite des Metallgehäuses sind Durchführungen 8 angebracht, durch die die entsprechenden Leitungen in das Metallgehäuse 6 geführt werden können. In dem Metallgehäuse 6 ist ein Modulträger 9 vorgesehen. Der Modulträger 9 ist in Fig. 4 detailliert dargestellt. Auf diesem Modulträger 9 sind verschiedene Steckplätze nebeneinander in Reihe angeordnet. An diesen Steckplätzen können verschiedene Module eingesteckt werden.

In Fig. 4 sind die ersten beiden Module auf der linken Seite entsprechende Leistungsversorgungsmodule 10. Über diese Leistungsversorgungsmodule 10 werden die entsprechenden weiteren Module auf dem Modulträger 9 mit Strom versorgt. Direkt rechts neben den beiden Leistungsversorgungsmodulen 10 in Fig. 4 sind zwei sogenannte Ethernet-Gateway-Module 11 vorgesehen. Eines der beiden in Figur 4 dargestellten Ethernet-Gateway-Module 11 ist leicht aus dem Modulträger herausgezogen (aus dem Steckplatz herausgezogen) und steht deshalb in der Figur leicht nach hinten über, sodass ein Teil der aus einem Gehäuseteil herausragenden Platine sichtbar ist.

Diese Ethernet-Gateway-Module 11 weisen jeweils an deren vorderen Schmalseite einen ersten beziehungsweise zweiten Port 21a, 21b, 22a, 22b auf, in dem ein Ethernet-Kabel eingesteckt werden kann, um diese Station an die Zentraleinheit anzubinden. Von diesen Ethernet-Gateway-Modulen 11 wird dann das entsprechende Signal in die sogenannten I/O-Module 14 eingeführt. Vorliegend sind 16 solcher I/O-Module vorgesehen. Diese können mittels Switch-Modulen mit einer Switch-Funktionalität versehen werden. Jedes dieser Module weist in dem Beispiel in Fig. 4 vier Ausgangskanäle auf. Über einen in der Fig. 4 an der hinteren Schmalseite jedes Moduls vorgesehenen Stecker (in Figur 4 nicht sichtbar), der auf dem Modulträger 9 auswechselbar eingesteckt ist, werden die entsprechenden Kanäle auf die entsprechenden Leitungen in den Modulträger 9 geführt.

An den in der Fig. 4 unterhalb des jeweiligen I/O-Moduls vorgesehenen vier übereinander liegenden horizontalen Steckplätze 26a, 26b, 26c, 26d wird der entsprechende Kanal des jeweiligen I/O-Moduls kontaktiert. Die vier Kanäle entsprechen somit vier Ports des I/O-Moduls. Somit können an jedes Modul vier Feldgeräte angeschlossen werden. Weitere Details der Ausgestaltung und der auswechselbaren Einsteckbarkeit sind in der EP 1 014 531 A2 beschrieben.

Insbesondere ist dort beschrieben, wie über den Modulträger 9 zum einen die entsprechenden I/O-Module 14 mit Spannung versorgt werden und zum anderen die entsprechenden Kontaktierungen für einen Datenaustausch dienen, sodass ein Datenaustausch zwischen den Feldgeräten 1 stattfinden kann. Zudem findet auch eine entsprechende Kontaktierung zur Kontrolle und Steuerung der entsprechenden I/O-Module 14 statt.

Ein I/O-Modul wird als solches bezeichnet, weil dort ein entsprechendes Signal des Feldgerätes 1 ein (engl. "in" das heißt "I") und aus (engl. "out" das heißt "O") geleitet werden kann.

Die im Stand der Technik bekannten I/O-Module verwenden in der Regel keine Kommunikation über Ethernet-Protokolle, sondern sehen eine analoge Anbindung von Feldgeräten vor, etwa über analoge 0-20 mA Stromschleifen oder digitale Namur-Signale.

Ausgehend von dem zuvor beschriebenen Stand der Technik ist es eine Aufgabe der Erfindung, solche an sich bekannten Stationen in Bezug auf die Nutzbarkeit im Bereich industrieller Netzwerke zu verbessern. Zur Lösung dieser Aufgabe wird eine Station mit den Merkmalen von Anspruch 1 angegeben.

Die Station zum Einsatz in einem Feldnetz zwischen zumindest einem Feldgerät und einer Zentraleinheit weist einen Modulträger und darauf auswechselbar einsteckbare Module auf. Dabei umfassen die Module zumindest ein Switch-Modul, an welches das zumindest eine Feldgerät anschließbar ist. Die auswechselbar einsteckbaren Module umfassen zusätzlich zumindest ein oder zwei Leistungsversorgungsmodule.

Die Station zeichnet sich dadurch aus, dass das zumindest eine Switch-Modul zumindest einen APL-Ethernet-Port und/oder zumindest einen SPE-Ethernet-Port zum Anschließen des zumindest einen Feldgeräts aufweist.

Es ist vorgesehen, dass das Switch-Modul mehrere APL- oder SPE-Ethernet-Ports aufweist, sodass mehrere Feldgeräte anschließbar sind.

Beim Anschließen eines Feldgeräts an einen APL- oder SPL-Ethernet-Port wird z.B. eine datentechnische Verbindung zwischen dem Feldgerät und dem Switch-Modul hergestellt beziehungsweise eine weitere Einheit kann über das Switch-Modul eine datentechnische Verbindung zu dem angeschlossenen Feldgerät herstellen. Ferner kann optional eine weitere elektrische Verbindung zwischen dem Switch-Modul und dem angeschossenen Feldgerät hergestellt werden, insbesondere für eine elektrische Leistungsversorgung. Die Leistungsversorgung kann dabei anhand eines Leistungsversorgungsmoduls der Station erfolgen. Die Leistungsversorgung kann ferner über die datentechnische Verbindung erfolgen.

"Ethernet Advanced Physical Layer" (Ethernet-APL), beschreibt eine physikalische Schicht für die Ethernet-Kommunikationstechnologie, die speziell für die Anforderungen der Prozessindustrie entwickelt wurde. Einige Gründe für die Entwicklung von Ethernet-APL waren die Notwendigkeit einer Kommunikation mit hoher Geschwindigkeit und über große Entfernungen, die Bereitstellung von Strom- und Kommunikationssignalen über ein einziges 2-adriges Kabel sowie Schutzmaßnahmen für den eigensicheren Betrieb innerhalb explosionsgefährdeter Bereiche.

Als Teil des weit verbreiteten Ethernet-Standards, der speziell für anspruchsvolle industrielle Anwendungen entwickelt wurde, bietet Ethernet-APL ein hohes Maß an Robustheit für einen äußerst zuverlässigen Betrieb. Ethernet-APL wurde als die bisher fehlende Verbindung entwickelt und erweitert die vereinheitlichte Ethernet-Kommunikation bis hin zur Feldinstrumentierung.

Ethernet-APL ist eine robuste, zweidrahtige, schleifengespeiste Ethernet-Physikschicht, die 10BASE-T1 L plus Erweiterungen für die Installation innerhalb der anspruchsvollen Betriebsbedingungen und Gefahrenbereiche von Prozessanlagen verwendet. Sie ermöglicht eine direkte Verbindung von Feldgeräten mit Ethernetbasierten Systemen, sodass die Prozessindustrie von einer Konvergenz ihrer OT-(*operational technology*; Betriebstechnologie) und IT-Systeme (*information technology*; Informationstechnologie) profitieren kann.

Ethernet-APL bietet zumal ein hohes Maß an Robustheit für einen äußerst zuverlässigen Betrieb. Somit kann in eine an sich bekannte Station ein Switch-Modul eingebaut werden, das mit dem APL-Ethernet-Standard arbeitet und das demnach entsprechende Kanäle für APL-Ethernet aufweist, an die die Feldgeräte angebunden werden können. Der Ein- und Ausbau beziehungsweise der Austausch von Switch-Modulen kann ferner im laufenden Betrieb erfolgen, selbst in einer Ex-Zone 1 oder 2, das heißt insbesondere auf "eigensichere" Weise.

Alternativ zu diesem APL-Standard kann in einer Variante auch ein Switch-Modul mit SPE-Ethernet-Ports vorgesehen sein.

Die Abkürzung SPE steht für Single Pair Ethernet. Es handelt sich um verschiedene Standards wie 802.3bp (1000Base-T1), 802.3bw (100Base-T1), 802.3cg (10Base-T1) oder 802.3ch (Multi-Gig Automotive Ethernet), mit denen sich Ethernet-Verbindungen über Kupferkabel mit nur einem einzigen verdrillten Adernpaar herstellen lassen. Es existieren Standards für Geschwindigkeiten von 10 und 100 über 1000 Megabit pro Sekunde bis hin zu mehreren Gigabit pro Sekunde. Die maximal überbrückbaren Entfernungen variieren zwischen 15, 40 und bis zu 1000 Metern.

Die SPE-Standards sind Alternativen zu den im LAN-Bereich gängigen Standards wie 100Base-TX oder 1000Base-T, die zwei oder vier verdrillte Adernpaare eines Netzwerkkabels zur Datenübertragung benötigen. Für die LAN-Verkabelung genutzte Kabeltypen wie Cat-5-, Cat-6- oder Cat-7-Kabel mit ihren RJ-45-Steckern sind im Vergleich zu den zweiadrigen SPE-Kabeln dicker, schwerer, teurer und aufwändiger zu verlegen.

Speziell für SPE existieren genormte Steckverbinder, die die Nachteile der RJ45-Steckverbinder, wie die unzuverlässige Verriegelung oder den schlechten Schutz gegen Schmutz und Feuchtigkeit, beseitigen. Da nur ein einziges Adernpaar für die Übertragung der Vollduplex-Signale zur Verfügung steht, werden auf dem Adernpaar die Signale gleichzeitig in beide Richtungen übertragen. Die Signale laufen im Kabel in gegensätzliche Richtungen und überlagern sich. Die Sende- und Empfangseinheiten kennen die selbst ausgesandten Signale und können daher die Empfangssignale aus dem überlagerten Gesamtsignal isolieren.

Neben der Verwendung einpaariger Kupferkabel ermöglicht Single Pair Ethernet das sogenannte Cable Sharing. Hierbei wird eine vierpaarige Verkabelung genutzt, um vier voneinander unabhängige SPE-Verbindungen über ein einziges Kabel herzustellen.

Analog zu Power over Ethernet für die LAN-Verkabelung ist es mit Single Pair Ethernet ebenfalls möglich, Endgeräte über das Kupferkabel mit der für den Betrieb benötigten elektrischen Energie zu versorgen. Hierfür wurde der Standard Power over Data Line (PoDL, 802.3bu) geschaffen, der mit den Power-over-Ethernet-Standards nicht kompatibel ist und Leistungen bis zu 50 Watt auf Endgeräteseite liefern kann.

Single Pair Ethernet ermöglicht Ethernet-Verbindungen mit Geschwindigkeiten zwischen 10 Mbit/s und mehreren Gbit/s über nur ein einziges verdrilltes Adernpaar. Die im LAN-Bereich üblichen Standards wie 100Base-TX oder 1000Base-T benötigen hingegen zwei oder vier verdrillte Adernpaare. Verwendet wird SPE beispielsweise im Automotive-Bereich oder in der Industrieautomation.

Somit kann in eine an sich bekannte Station anstelle von bekannten I/O-Modulen ein Switch-Modul eingebaut werden, das mit dem SPE-Ethernet-Standard arbeitet und demnach entsprechende Kanäle für SPE-Ethernet aufweist, an die die Feldgeräte angebunden werden können.

Somit ist zumindest ein Switch-Modul, das für den APL-Standard konfiguriert ist, beziehungsweise ein Switch-Modul, das für das SPE-Ethernet konfiguriert ist, vorgesehen. Diese Module können auswechselbar an dem Modulträger angebracht werden.

Zum Beispiel ist die Station dabei so konfiguriert, dass zumindest eines der Leistungsversorgungsmodule (10a, 10b) ohne Unterbrechung des Betriebs der Station und der weiteren eingesteckten Module entfernt oder ausgetauscht werden kann.

Beispielsweise sind zumindest zwei der auswechselbar einsteckbaren Module als Leistungsversorgungsmodule ausgebildet, sodass eine redundante elektrische Leistungsversorgung der Switch-Module und gegebenenfalls weiterer I/O-Module erreicht wird. Insbesondere können die Leistungsversorgungsmodule dabei so konfiguriert sein, dass eines der Leistungsversorgungsmodule ohne Unterbrechung des Betriebs der Station und der weiteren eingesteckten Module entfernt oder ausgetauscht werden kann. Eventuell nötige Reparaturen beziehungsweise ein Austausch eines Leistungsversorgungsmoduls kann daher im laufenden Betrieb erfolgen. Ferner wird auf diese der Betrieb der eingesteckten Module nicht unterbrochen, wenn eines der Leistungsversorgungsmodule ausfällt oder entnommen beziehungsweise gezogen wird.

Dabei wird insbesondere die Leistung pro Modul so gruppiert, dass keine zu hohe Leistung bereitgestellt wird, um einen eigensicheren Betrieb zu ermöglichen und eine Eignung für Ex-Zone 1 zu gewährleisten.

Dies kann etwa durch eine Spannungs- und/oder Strombegrenzung der Leistungsversorgungsmodule erreicht werden, sodass keine Explosion durch entstehenden Funkenschlag ausgelöst werden kann.

Gemäß einer vorteilhaften Weiterbildung der Erfindung umfassen die Module auf dem Modulträger zudem ein Ethernet-Gateway-Modul, über welches das Switch-Modul an die Zentraleinheit anbindbar ist. Das heißt, über das Switch-Modul und das Ethernet-Gateway-Modul ist eine datentechnische Verbindung zwischen dem angeschlossenen Feldgerät und der Zentraleinheit herstellbar.

Ein solches Ethernet-Gateway-Modul ist an sich bekannt. Vorliegend ist dieses Modul zum Beispiel auch auswechselbar an dem Modulträger vorgesehen. Über dieses Ethernet-Gateway-Modul kann von der Zentraleinheit ein Ethernet-Signal mit einem vorgegebenen Standard, beispielsweise 100 Base TX oder 1000 Base T1 eingeführt werden. Von diesem Ethernet-Gateway-Modul wird dann das Signal zu den entsprechenden Switch-Modulen, die zumindest ausgangseitig den oder die APL-Ethernet-Ports beziehungsweise den oder die SPE-Ethernet-Ports aufweisen, geleitet. Dieses Ethernet-Gateway-Modul kann zum Beispiel ein oder zwei Ports aufweisen, über die eine Ethernet-Verbindung hergestellt werden kann.

Gemäß einer vorteilhaften Weiterbildung der Erfindung ist die Station so konfiguriert, dass die Steuerung des Switch-Moduls und gleichzeitig ein Datenaustausch, der von den Feldgeräten über das Switch-Modul stattfindet, über ein Bussystem erfolgen. Dies ermöglicht vorteilhafterweise einen besonders einfachen Aufbau.

Beim Datenaustausch für die Steuerung des Switch-Moduls können etwa über einen Internal Control Bus, der insbesondere redundant ausgelegt sein kann, Steuerungsdaten, Diagnosedaten und ähnliche Daten für die einzelnen Module übertragen werden.

Analog dazu kann auch eine Datenübertragung für die weiteren auswechselbar einsteckbaren Module, etwa zu deren Steuerung und/oder Überwachung, über das Bussystem erfolgen.

Das Bussystem ist zum Beispiel im Wesentlichen in dem Modulträger integriert. Die entsprechenden Module weisen somit Stecker beziehungsweise Kontaktflächen auf, sodass die entsprechenden Module mit den entsprechenden Verbindungen auf dem Modulträger kontaktiert werden können.

Bei dieser Variante findet sowohl die Steuerung der Module selber, als auch der Datenaustausch zu den Feldgeräten über das Bussystem statt. Das Bussystem kann also in doppelter Weise genutzt werden: Einerseits können Daten zwischen dem einzelnen eingesteckten Modul, etwa einem Switch-Modul, und einer Zentraleinheit übertragen werden, andererseits kann auch die Kommunikation zwischen der Zentraleinheit und den angeschlossenen Feldgeräten über das Bussystem erfolgen.

Gemäß einer weiteren Ausgestaltung kann die Station auch so ausgebildet sein, dass lediglich die Steuerung (beziehungsweise die Datenübertragung für die Steuerung) des Switch-Moduls oder der Switch-Module und/oder weiterer eingesteckter I/O-Module über das Bussystem erfolgt. Um einen Datenaustausch mit den Feldgeräten über die Switch-Module zu realisieren, ist dann eine von dem Bussystem separierte Ethernet-Verbindung vorgesehen.

Eine solche separierte Ethernet-Verbindung kann gemäß einer vorteilhaften Weiterbildung der Erfindung dadurch hergestellt werden, dass das Switch-Modul beispielsweise über ein Patch-Ethernet-Kabel mit dem Ethernet-Gateway-Modul verbunden ist.

Hierfür kann beispielsweise der zweite Port des Ethernet-Gateway-Moduls genutzt werden. Das Patch-Ethernet-Kabel kann diesen zweiten Port des Ethernet-Gateway-Moduls mit einem ersten Port des Switch-Moduls verbinden.

So sind für die entsprechende Ausgestaltung beispielsweise entsprechende Ports für Ethernet-Stecker an einer vorderen Schmalseite der Module (Ethernet-Gateway-Modul und/oder Switch-Modul) vorgesehen.

Ein solches Ethernet-Patch-Kabel kann auch zwei benachbarte Switch-Module miteinander verbinden. Die Switch-Module weisen entsprechend einen ersten und zweiten Port für die entsprechenden Patch-Ethernet-Kabel auf und die entsprechenden Switch-Module können beispielsweise in Reihe hintereinander geschaltet werden und die entsprechende Ethernet-Verbindung wird durch die entsprechenden Module durchgezogen und so beispielsweise im Kreis geleitet. Bei einer solchen Ringkonfiguration wird eine Ethernet-Verbindung von der Zentraleinheit zum ersten Port des Ethernet-Gateway-Moduls implementiert, dann vom zweiten Port des Ethernet-Gateway-Moduls über ein Patch-Ethernet-Kabel eine Verbindung zum ersten Switch-Modul und weiter über zusätzliche Patch-Kabel zum jeweils nächsten Switch-Modul. Auf diese Weise können mehrere Switch-Module in Reihe geschaltet werden. Dabei wird das letzte der in Reihe miteinander verbundenen Switch-Module wieder mit der Zentraleinheit verbunden. So wird eine Ethernet-Ringverbindung implementiert.

Die Ethernet-Ringverbindung kann es etwa ermöglichen, eines der so verbundenen I/O-Module im laufenden Betrieb herauszunehmen oder zu deaktivieren beziehungsweise auszutauschen oder ein neues I/O-Modul in die Datenleitung hinzuzufügen. Wenn es dabei zu einer Unterbrechung der Datenleitung in eine Richtung kommt, kann ersatzweise die Datenleitung in umgekehrte Richtung entlang des nun offenen Rings erfolgen.

Im Gegensatz zu der beschriebenen Ausgestaltung, bei der beides, die Steuerung des Switch-Moduls und der Datenaustausch für die Kommunikation zwischen der Zentraleinheit und den angeschlossenen Feldgeräten, über das Bussystem stattfindet, kann bei der zuletzt beschriebenen Ausgestaltung der in dem Ethernet-Gateway-Modul eingebrachte Ethernet-Standard zu dem entsprechenden Switch-Modul transferiert und dort in einen APL- und/oder SPE-Ethernet-Standard für den Datenaustausch mit den angeschlossenen Feldgeräten umgewandelt werden.

Durch das Anschließen von mehreren Modulen, insbesondere mehreren Switch-Modulen, in Reihe wird eine Kaskadierbarkeit des Systems erreicht. Das heißt, die Zahl der Anschlüsse ist sehr einfach variierbar, indem neue Switch-Module mit mehreren Anschlüssen für APL- und/oder SPE-Ethernet hinzugefügt, entfernt oder ausgetauscht werden. Bei den eigensicher betriebenen Geräten kann dies auch im laufenden Betrieb erfolgen.

Gemäß einer Weiterbildung der Erfindung kann der Modulträger eine Backplane aufweisen, über die die Module einsteckbar sind. Eine solche Backplane ist bereits in Bezug auf den eingangs zitierten Stand der Technik der EP 1 014 531 A2 beschrieben.

Gemäß einer weiteren Variante der Erfindung kann in die Backplane eine Steuereinheit integriert sein, über welche die Steuerung der Switch-Module stattfindet.

Wenn dies der Fall ist, kann beispielsweise das Ethernet-Gateway-Modul komplett weggelassen werden, denn die Steuerung der Switch-Module findet beispielsweise in dieser Steuerung statt. Wenn diese Steuerung in die Backplane integriert ist, ist die Backplane mehr als eine Art Steckkarte, sondern weist an sich eine Steuerfunktionalität für die eingesteckten Switch-Module auf und für unterschiedliche Anwendungen können dann unterschiedliche Backplanes, beispielsweise in dem Gehäuse integriert werden und als Station vorgesehen werden.

Die Backplane weist gemäß einer vorteilhaften Weiterbildung der Erfindung somit mindestens zwei Ethernet Ports auf, die mit der Steuereinheit verbunden sind, um die Steuereinheit an die Zentraleinheit anzubinden. Diese Ports können entsprechende Spezifikationen für die unterschiedlich bekannten Ethernet-Standards aufweisen, insbesondere Spezifikationen für SPE oder APL-Ethernet.

Ähnlich wie die zuvor beschriebene erste Variante kann hier von der Steuereinheit der Datenaustausch sowohl für eine Steuerung der einsteckbaren (Switch-)Module, als auch für eine datentechnische Verbindung mit den angeschlossenen Feldgeräten, über das Bussystem in der Backplane geschehen. Dieses Bussystem ist zum Beispiel in die Backplane integriert und über die entsprechenden Steckplätze kann das Bussystem an das Switch-Modul angekoppelt werden.

Es sind beispielsweise mehrere Switch-Module in der Station nebeneinander angeordnet, die jeweils in dem Modulträger auswechselbar eingesteckt sind. Dies erlaubt eine einfache Kaskadierbarkeit durch Hinzufügen, Entfernen und/oder Austauschen von in Reihe miteinander verbundenen Switch-Modulen.

Wie ein solches Switch-Modul (zum Beispiel optisch von außen, beziehungsweise dessen Geometrie) aussehen kann, wurde in Bezug auf den Stand der Technik in Fig. 4 und 5 bereits erläutert. Ein solches Switch-Modul kann ein Gehäuse aufweisen, das im Wesentlichen eine eckige Ausgestaltung nach Art einer Film- oder Kassettendose hat mit entsprechenden Schmalseiten, die die zwei gegenüberliegenden Plattenelemente, die das Gehäuse bilden, miteinander verbinden. An einer Schmalseite sind beispielsweise die Steckverbinder zur Verbindung mit der Backplane vorgesehen. Auf der dieser Schmalseite gegenüberliegenden Frontseite sind dann beispielsweise ein oder zwei weitere Ethernet Ports vorgesehen. Die generelle Konfiguration wurde in Bezug auf Fig. 4 und 5 beschrieben, deren Offenbarung auch für die vorliegende Erfindung zu berücksichtigen ist.

Gemäß einer vorteilhaften Weiterbildung der Erfindung sind maximal 16 solcher Switch-Module in der Station nebeneinander vorgesehen. Wenn mehr als 16 Switch-Module vorgesehen sind, müssen die Leistungsversorgungsmodule eine solch hohe Leistung aufweisen, dass beispielsweise die Voraussetzungen für den Einsatz in Ex-Zone 1 gar nicht mehr erfüllt werden können.

Deshalb ist die Anzahl der Switch-Module nach oben beschränkt, denn, je höher die Leistung der Leistungsversorgungsmodule ist, die zur Leistungsversorgung nötig sind, kann es dann bei dem Ein- und Ausstecken der Switch-Module auch zu einer Funkenbildung kommen und die entsprechende Station erfüllt nicht mehr die Voraussetzungen für den Einsatz in Ex-Zone 1.

Insbesondere weisen die Switch-Module, die nebeneinander vorgesehen sind, alle dieselbe Bauart auf. Die Switch-Module können aber auch unterschiedliche Bauarten aufweisen, sodass in zwangloser Mischung auch einzelne oder mehrere der erfindungsgemäßen vorbeschriebenen Switch-Module (APL-Ethernet-Module beziehungsweise SPE-Ethernet-Module) vorgesehen sein können. Zumal können auch in zwangloser Reihenfolge an sich bekannte I/O-Module, die zuvor in Bezug auf den Stand der Technik beschrieben sind, verwendet werden.

Ferner können andere auswechselbar einsteckbare Module vorgesehen sein.

Ein solches I/O-Modul hat vorteilhafterweise zwischen zwei und sechs Feldgeräteanbindungs-Ports. Die Anzahl ist insbesondere auf vier beschränkt.

Die zuvor genannte Anzahl ist günstig um, soweit nötig, die Voraussetzungen für den Einsatz in Ex-Zone 1 zu erfüllen.

Ein solches Switch-Modul weist dementsprechend einen Stecker mit entsprechenden Pins auf, die in den Steckplatz eingesteckt werden können. Von einer über die Backplane integrierte Leitungsanordnung können dann die Signale der entsprechenden Ports in entsprechende Ausgangsstecker übertragen werden, an denen die Feldgeräte angeschlossen werden können.

Insbesondere ist die erfindungsgemäße Station derart konfiguriert, dass sie in der Ex-Zone 1 betrieben werden kann.

Das heißt, dass sie gemäß den gesetzlichen Vorschriften in Deutschland und in Europa in Bereichen betrieben werden kann, in denen damit zu rechnen ist, dass eine explosionsfähige Atmosphäre von Luft mit brennbaren Substanzen in Form von Gas, Dampf oder Nebel im Normalbetrieb auftritt.

Gemäß eines nicht beanspruchten Aspektes wird ein entsprechendes einsteckbares Switch-Modul mit mehreren APL-Ethernet-Ports beziehungsweise SPE-Ethernet-Ports angegeben.

Das in einen Modulträger auswechselbar einsteckbare Switch-Modul, an welches ein oder mehrere Feldgeräte anschließbar sind, weist zumindest zwei Kanäle für eine Steuerung desselben über ein Bussystem und einen oder mehrere APL-Ethernet-Ports und/oder einen oder mehrere SPE-Ethernet-Ports zur Anbindung an das Feldgerät beziehungsweise eines der mehreren Feldgeräte auf.

Ein solches Modul ist insbesondere für die vorgehend beschriebene Station vorgesehen und kann die zuvor beschriebenen Merkmale aufweisen beziehungsweise für die verschiedenen beschriebenen Varianten der Station eingerichtet sein.

Das Modul kann insbesondere über ein Bussystem des Modulträgers mit elektrischer Leistung versorgt werden.

Das Modul hat gemäß einer vorteilhaften Weiterbildung zumindest zwei Kanäle für eine Steuerung desselben über ein Bussystem und einen oder mehrere APLbeziehungsweise SPE-Ethernet-Ports. Darüber hinaus kann das Switch-Modul zusätzlich noch einen ersten und zweiten Port aufweisen, über welchen das Switch-Modul an eine Ethernet-Verbindung anschließbar ist.

Bei einer Weiterbildung sind zudem ein erster und ein zweiter Port vorgesehen, über welche das Switch-Modul an eine Ethernet-Verbindung anschließbar ist, über welche via dem Switch-Modul ein Datenaustauch zwischen dem zumindest einen Feldgerät und der Zentraleinheit stattfinden kann

Weitere vorteilhafte Ausgestaltungen werden nachfolgend anhand der Figuren beschrieben. Dabei zeigen:
- Fig. 1: ein erstes Ausführungsbeispiel einer erfindungsgemäßen Station;
- Fig. 2: ein zweites Ausführungsbeispiel einer erfindungsgemäßen Station;
- Fig. 3: ein drittes Ausführungsbeispiel einer erfindungsgemäßen Station;
- Fig. 4 und 5: eine im Stand der Technik bekannte Station; und
- Fig. 6: ein im Stand der Technik bekanntes Prozessautomationssystem. '

Die Ausgestaltungen gemäß dem Stand der Technik, die in Fig. 4 bis 6 dargestellt sind, wurden bereits in der Beschreibungseinleitung diskutiert und werden nachfolgend nicht weiter beschrieben.

Diese für den Stand der Technik beschriebenen Aspekte können auch für das vorliegende System vorgesehen sein. Das heißt, die vorliegende Station kann zum Beispiel in das System, wie es in Fig. 6 dargestellt ist, integriert werden. Auch können Elemente der Station beziehungsweise die IO-Module aus der Station in Fig. 4 und 5 auch in die vorliegende Station aufgenommen werden.

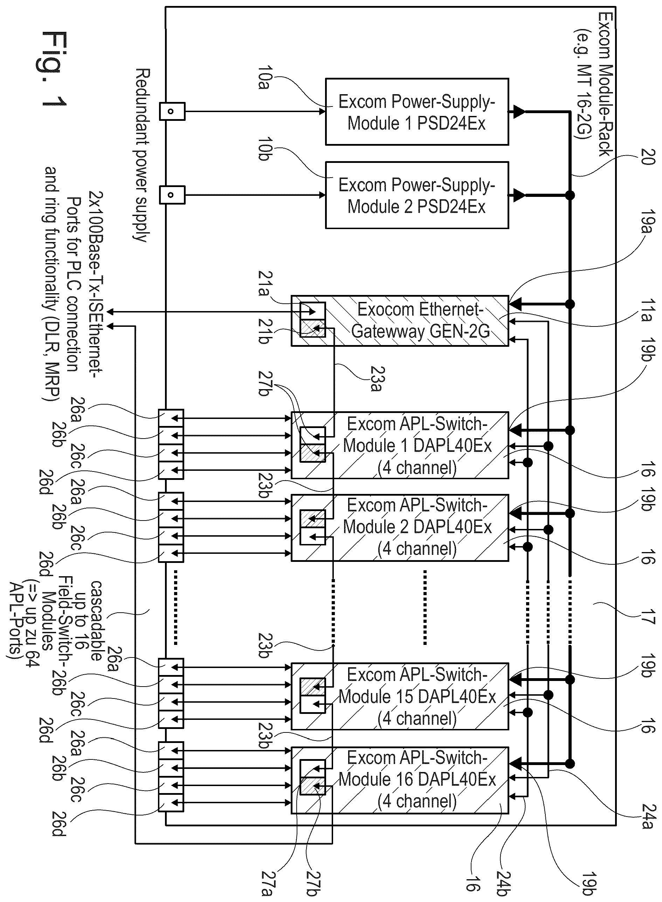

Die Fig. 1 bis 3 zeigen lediglich schematisch die entsprechenden Elemente und Verbindungen. Wie die entsprechenden Module und/oder die entsprechende Station optisch aussehen, entspricht beispielsweise der in Fig. 4, 5 gezeigten Ausgestaltung, das heißt die entsprechenden Module können etwa eine kassettenförmige Ausgestaltung mit einer vorderen und hinteren Schmalseite haben. Es werden nachfolgend lediglich die weitergehenden Aspekte, die für die vorliegende Erfindung von Bedeutung sind, erläutert.

In Fig. 1 sind mit Bezugszeichen 10a und 10b ein erstes und zweites Leistungsversorgungsmodul bezeichnet (hier: "Excom Power-Supply-Module 1 PSD24Ex" und "Excom Power-Supply-Module 2 PSD24Ex"). Dabei wird eine redundante Leistungsversorgung ("redundant power supply") bereitgestellt.

Bezugszeichen 16 bezeichnet die jeweiligen Switch-Module (hier: "Excom APL-Switch-Module 1 DAPL40Ex (4 channel)" und "Excom APL-Switch-Module 2 DAPL40Ex (4 channel)" bis "Excom APL-Switch-Module 15 DAPL40Ex (4 channel)" und "Excom APL-Switch-Module 16 DAPL40Ex (4 channel)"). Diese sind kaskadierbar bis zu 16 Feld-Switch-Modulen und damit bis zu 64 APL-Ports ("cascadable up to 16 Field-Switch-Modules (→ up to 64 APL-ports)").

Bezugszeichen 11a bezeichnet ein Ethernet-Gateway-Modul (hier: "Excom Ethernet-Gateway GEN-2G").

Die entsprechenden Module 10a, 10b, 11a und 16 sind auf dem mit dem Bezugszeichen 17 bezeichneten Modulträger (hier: "Excom Module-Rack (e.g. MT 16-2G") auswechselbar aufgesteckt.

Der Modulträger 17 ist vorliegend als sogenannte Backplane ausgeführt. Dort sind (in der Figur nicht dargestellte) Steckverbinder vorgesehen, in denen entsprechende Steckverbinder der Module eingesteckt werden können. So ist beispielsweise das Leistungsversorgungsmodul 10a über an einer Rückseite davon vorgesehenen und nicht dargestellten Steckverbinder mit Steckverbindern auf dem Modulträger verbunden. In Fig. 1 sind die entsprechenden Steckverbinder nicht dargestellt. Jedoch sind diese in Reihe nebeneinander von links nach rechts vorgesehen, sodass die entsprechenden Module nebeneinander nach der Art, wie sie in Fig. 4 dargestellt sind, eingesteckt werden können.

Unterhalb der Switch-Module 16 sind schematisch entsprechende Gruppen von jeweils vier vorgesehenen Steckplätzen 26a, 26b, 26c, 26d, die zum Anschluss jeweils eines entsprechenden Feldgerätes dienen, vorgesehen. Jedem Switch-Modul 16 sind bei diesem Beispiel vier solcher Steckplätze 26a, 26b, 26c, 26d zugeordnet, um entsprechend vier Feldgeräte anschließen zu können.

Entsprechend weist jedes Switch-Modul vorliegend vier Kanäle auf, die jeweils einen entsprechenden Port bilden. Dieser Port ist über eine rückseitig an dem entsprechenden Switch-Modul vorgesehenen Steckkontakt mit dem Modulträger verbunden und dort über eine Verdrahtung mit den entsprechenden Steckplätzen 26a, 26b, 26c, 26d zum Anschluss an die Feldgeräte angebunden.

Ferner können weitere, hier nicht gezeigte I/O-Module eingesteckt sein, etwa für eine Kommunikation über eine analoge 4-20 mA Stromschleife.

Mit den Bezugszeichen 19a und 19b sind ferner schematisch Anschlüsse für die Leistungsversorgungsmodule gezeigt. Die Leistungsversorgungsmodule versorgen über die entsprechende Verdrahtung in dem Modulträger die entsprechenden weiteren Module, beispielsweise Ethernet-Gateway-, I/O- und/oder Switch-Module.

Dies ist schematisch an der mit Bezugszeichen 20 bezeichneten Leistungszuleitung ("internal power supply") zu erkennen, die den entsprechenden Modulen zugeführt wird.

Bei dem Ausführungsbeispiel sind zwei Leistungsversorgungsmodule 10a, 10b vorgesehen, mittels derer eine redundante Leistungsversorgung implementiert wird. Insbesondere wird die Leistungsversorgung der eingesteckten Module nicht unterbrochen, wenn eines der Leistungsversorgungsmodule 10a, 10b ausfällt oder entnommen beziehungsweise gezogen wird. Dies ermöglicht eine eventuell nötige Reparatur beziehungsweise den Austausch im laufenden Betrieb.

Es kann beispielsweise eine 24 Volt Gleichspannung zugeführt werden (oder beispielsweise eine Spannung zwischen 18 und 32 Volt). Diese wird dann den Modulen über die Leistungsversorgungsmodule 10a, 10b zugeführt. In dem Ausführungsbeispiel aus Fig. 1 weist das Ethernet-Gateway-Modul 11a einen ersten Port 21a und einen zweiten Port 21b auf, über die das Ethernet-Gateway-Modul 11a an ein Ethernet angeschlossen werden kann.

Der erste Port 21a dient vorliegend zur Verbindung des Ethernet-Gateway-Moduls 11a mit einer in der Figur nicht dargestellten Zentraleinheit. Der zweite Port 21b dient vorliegend zur Verbindung des Ethernet-Gateway-Moduls 11a mit den entsprechenden Switch-Modulen 16. Jedes der Switch-Module 16 weist vorliegend ebenfalls einen ersten Port 27a und einen zweiten Port 27b auf. Zwischen dem zweiten Port 21b des Ethernet-Gateway-Moduls 11a und dem ersten Port 27a des Switch Moduls 16 ist vorliegend ein Ethernet-Patch-Kabel 23a vorgesehen. Die entsprechenden benachbarten Switch-Module 16 sind jeweils in analoger Weise über die Ethernet-Patch-Kabel 23b miteinander verbunden.

So wird jeweils ein Ethernet-Patch-Kabel 23b aus dem zweiten Ethernet Port 27b des entsprechenden Switch-Moduls 16 herausgeführt und in den ersten Port 27a des entsprechenden benachbarten Switch-Moduls 16 eingeführt.

In der vorliegenden Ausführungsform ist das in der Reihe von links nach rechts in der Figur dargestellte letzte Switch-Modul mit seinem zweiten Port 27b an die Zentraleinheit angebunden ("2x100Base-Tx-ISEthernet-Ports for PLC connection and ring functionality (DLR, MRP)"). Somit wird ein sogenannter Ethernet-Ring gebildet. Über diese ringförmige Ethernet-Verbindung findet der Datenaustausch der Daten von den Feldgeräten statt. Bei weiteren Ausführungsbeispielen kann ein von der Ringkonfiguration abweichender Aufbau vorgesehen sein.

Separat dazu ist im vorliegenden Beispiel die Steuerung der entsprechenden Switch-Module ausgebildet. Diese Steuerung wird vorliegend durch das zweikanalige Bussystem 24a, 24b gebildet. Über dieses Bussystem 24a, 24b können einerseits Steuerungssignals an die Switch-Module übertragen werden, andererseits können beispielsweise Betriebsdaten von den Switch-Modulen bereitgestellt werden.

Somit weisen vorliegend das Ethernet-Gateway-Modul 11 und auch die entsprechenden Switch-Module 16 entsprechende Steckverbindungen auf, mit denen diese an den Modulträger angebunden werden können. In dem Modulträger ist eine entsprechende Verdrahtung für das entsprechende zweikanalige Bussystem 24a, 24b vorzusehen.

Somit ist vorliegend die Steuerung der Switch-Module getrennt von der Datenübertragung zu den beziehungsweise von den an die Switch-Module angeschlossenen Feldgeräten.

Jedes der Switch-Module 16 weist demnach bei diesem Beispiel zwei Kanäle für eine Ethernet-Verbindung (zu dem Ethernet-Gateway-Modul, zur Zentraleinheit beziehungsweise zu den benachbarten Switch-Modulen) auf. Zwei Kanäle sind dabei vorgesehen für eine Busverbindung zur Steuerung des Switch-Moduls und vier Kanäle für entsprechende Datentransfers zu den angeschlossenen Feldgeräten.

Beim diesem Beispiel ist das entsprechende Switch-Modul derart ausgeführt, dass die vier Kanäle als APL-Ethernet-Kanal ausgebildet sind. Dabei sind für jedes der Switch-Module genau vier APL-Ausgänge beziehungsweise SPE-Ports vorgesehen. Wenn mehrere Ports vorgesehen sind, könnte die zu einer so großen Leistungsaufnahme führen, dass die Station dann nicht mehr in der Ex-Zone 1 verwendet werden könnte.

Bei weiteren Ausführungsbeispielen können auch weniger als vier APL-Ausgänge vorgesehen sein. Bei weiteren Ausführungsbeispielen können ferner mehr Ausgänge vorgesehen sein, wobei optional auch weitere Maßnahmen zur Begrenzung der ausgebbaren elektrischen Leistung vorgesehen sein können.

Zudem sind vorliegend bis zu 16 solcher Switch-Module 16 nebeneinander vorgesehen.

Es können auch weniger als 16 Switch-Module nebeneinander vorgesehen sein und jede beliebige Zahl zwischen 2 und 15 kann für sich eine obere beziehungsweise untere Grenze bilden. Bei weiteren Ausführungsbeispielen können ferner mehr Switch-Module 16 in Reihe verbindbar sein, wobei optional auch weitere Maßnahmen zur Begrenzung der ausgebbaren elektrischen Leistung vorgesehen sein können.

Vorliegend wird die Kommunikation zwischen der Zentraleinheit über das Ethernet-Gateway-Modul 11a und zwischen den entsprechenden Switch-Modulen über 100 Base TX Ethernet-Standard geführt. Es kann prinzipiell jeder andere Ethernet-Standard verwendet werden.

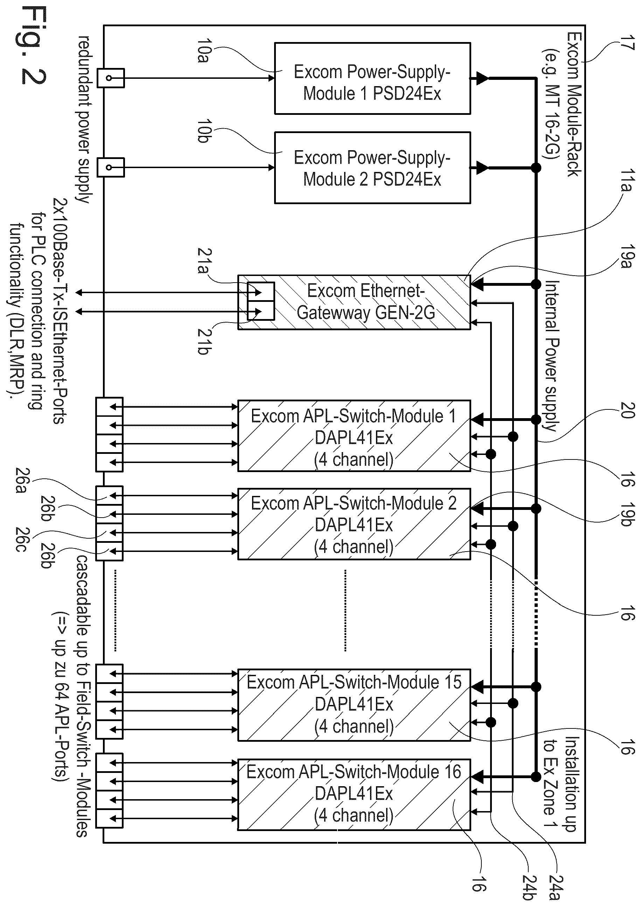

In Fig. 2 ist ein zweites Ausführungsbeispiel beschrieben. Dort sind gleiche Elemente mit gleichen Bezugszeichen verwendet.

Nachfolgend sind lediglich die Unterschiede zu dem Beispiel in Fig. 1 beschrieben. In dem Beispiel in Fig. 2 wird sowohl die Steuerung der Switch-Module 16 (hier: "Excom APL-Switch-Module 1 DAPL41Ex (4 channel)" und "Excom APL-Switch-Module 2 DAPL41Ex (4 channel)" bis "Excom APL-Switch-Module 15 DAPL41Ex (4 channel)" und "Excom APL-Switch-Module 16 DAPL41Ex (4 channel)"). Diese sind kaskadierbar bis zu 16 Feld-Switch-Modulen und damit bis zu 64 APL-Ports ("cascadable up to 16 Field-Switch-Modules (→ up to 64 APL-ports)") als auch der Datentransfer für die angeschlossenen Feldgeräte über das Bussystem 24a, 24b implementiert.

Deshalb sind dort nicht die entsprechenden Ethernet-Patch-Kabel vorgesehen, wie sie in Fig. 1 gezeigt sind, um die in Reihe verbundenen Switch-Module miteinander datentechnisch zu verbinden. Das Ethernet-Gateway-Modul 11a (hier: "Excom Ethernet-Gateway GEN-2G") hingegen ist mit seinem ersten Port 21a und zweiten Port 21b an die Zentraleinheit angeschlossen. Die Switch-Module 16 weisen entsprechend nicht die Ports 27a, 27b des ersten Ausführungsbeispiels auf.

Das Ethernet-Gateway-Modul 11a ist daher bei dieser Ausführungsform dazu konfiguriert, die entsprechenden Signale zu transformieren und/oder zu verteilen.

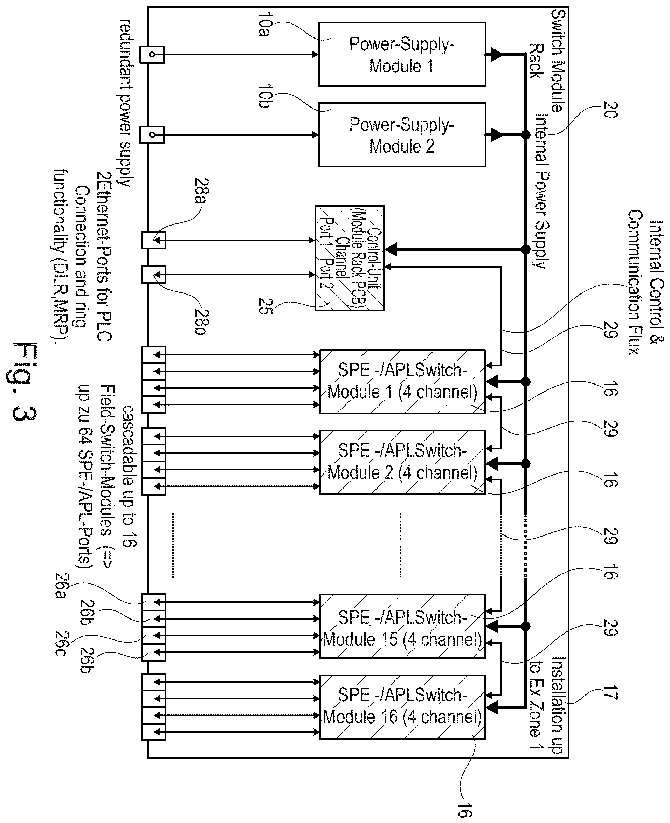

In dem Ausführungsbeispiel in Fig. 3 sind ebenso die gleichen oder vergleichbaren Elemente mit gleichen Bezugszeichen versehen wie bei den oben erläuterten Fig. 1 und 2.

Es werden lediglich die Unterschiede in Bezug auf die Ausführungsbeispiele in Fig. 1 und 2 beschrieben.

Es ist erneut eine redundante Leistungsversorgung ("redundant power supply") durch die mit Bezugszeichen 10a und 10b bezeichneten Leistungsversorgungsmodule (hier: "Power-Supply-Module 1" und "Power-Supply-Module 2") vorgesehen.

Anstelle des Ethernet-Gateway-Moduls 11a, das als ansteckbares Modul vorgesehen ist, ist bei diesem Ausführungsbeispiel eine mit dem Bezugszeichen 25 versehene Steuereinheit (hier: "Control-Unit (Module Rack PCB) Channel Port 1 and Port 2") vorgesehen. Diese Steuereinheit 25 ist in den Modulträger 17 ("Switch Module Rack", "Installation up to Ex Zone 1"), das heißt in die Backplane integriert.

Zusätzlich zu den Steckverbindungen, über die die Module an die Backplane angeschlossen werden können, ist die entsprechende Steuereinheit 25 in der Backplane integriert. Diese Steuereinheit 25 ist so fest über die in der Backplane integrierten Leitungen mit den entsprechenden weiteren Steckplätzen der Leistungsversorgungsmodule beziehungsweise der Switch-Module 16 verbunden.

Die Steuereinheit 25 kann entsprechende Ports aufweisen, die mit einem entsprechenden Steckplatz verbunden sind.

In Figur 3 ist mit Bezugszeichen 28a, und 28b ein erster und ein zweiter Port (in Form eines Steckers) dargestellt, über den ein Ethernet-Kabel von der Zentraleinheit beziehungsweise von einer übergeordneten Steuereinheit an die Station angeschlossen werden kann. Diese Ports sind auf dem Modulträger 17 vorgesehen. Es ist ein Anschluss an zwei Ethernet-Ports vorgesehen, wobei auch eine Ringkonfiguration ermöglicht wird ("2 Ethernet Ports for PLC Connection and ring functionality (DLR, MRP)").

In dem ersten und zweiten Ausführungsbeispiel sind die Switch-Module als APL-Switch-Module ausgeführt. Vorliegend können entweder APL- oder SPE-Switch-Module oder Switch-Module verschiedener Art vorgesehen sein.

Die hier gezeigten Switch-Module weisen in dem vorliegenden Ausführungsbeispiel ebenfalls vier Ports auf. Es können auch mehr oder weniger Ports vorgesehen sein.

Die entsprechenden Switch-Module 16 (hier: "SPE-/APL-Switch-Module 1 (4 channel)" und "SPE-/APL-Switch-Module 2 (4 channel)" bis "SPE-/APL-Switch-Module 15 (4 channel)" und "SPE-/APL-Switch-Module 16 (4 channel)") werden über die Steuereinheit 25 gesteuert. Zudem findet eine Datenübertragung über diese Switch-Module zu den Feldgeräten auch über diese Verbindung statt.

Auch diese Switch-Module 16 sind kaskadierbar bis zu 16 Feld-Switch-Modulen und damit bis zu 64 APL-Ports ("cascadable up to 16 Field-Switch-Modules (→ up to 64 APL-ports)").

Dies ist schematisch an den Pfeilen mit Bezugszeichen 29 ("Internal Control and Communication Flux") in der Figur dargestellt.

Soweit es sich bei den Switch-Modulen um die SPE-Module handelt, sind diese oftmals nicht geeignet für den Einsatz in den Ex-Zonen 1 oder 2. Das dritte Ausführungsbeispiel beschreibt somit eine Station, bei der eine in die Backplane integrierte Steuereinrichtung vorgesehen ist.

Bei einer erneuten Betrachtung des in Fig. 6 gezeigten Systems kann ein Aspekt verdeutlicht werden, wie die Erfindung genutzt werden kann: Das rechts in einem Bereich außerhalb der Ex-Zone gezeigte Remote-I/O-System 14 kann nunmehr in die Ex-Zone verlegt und zusätzlich mit einem Switch-Modul ausgestattet werden. Ein solches Remote-I/O-System 14 wird dann über einen Ex-fähigen Feldbus mit dem PLC 2 außerhalb der Ex-Zone verbunden und erlaubt seinerseits den Anschluss mehrerer Feldgeräte, unter anderem über SPE beziehungsweise APL.

Die Erfindung erlaubt eine einfache Kaskadierbarkeit des Systems, da Switch-Module für den Anschluss eines oder mehrerer Feldgeräte einfach hinzugefügt, entfernt oder ausgetauscht werden können, selbst im laufenden Betrieb.

Dabei wird durch die Steuerung der Leistungsversorgungsmodule sichergestellt, dass für einzelne Switch-Module beziehungsweise die einzelnen angeschlossenen Feldgeräte jeweils so viel Leistung bereitgestellt wird, dass ein eigensicherer Betrieb gewährleistet ist.

Ferner können die Switch-Module im laufenden Betrieb des Systems eigensicher in Betrieb genommen, entnommen, ausgetauscht oder erweitert werden.

Ferner ermöglicht die Erfindung eine hohe Redundanz wichtiger Elemente, insbesondere der doppelt ausgeführten Leistungsversorgungsmodule.

Die Erfindung ermöglicht ferner eine schrittweise Umrüstung von Systemen, etwa in der Prozesstechnik. Dabei sind in einer gemischten Konfiguration an einer Station sowohl Switch-Module für den Anschluss SPE- oder APL-fähige Feldgeräte vorgesehen, als auch I/O-Module für den Anschluss anderer Feldgeräte. Es können daher schrittweise neue Feldgeräte mit SPE oder APL integriert werden, während die vorhandenen weiteren Feldgeräte weiterhin nutzbar sind.

### Bezugszeichenliste

- 1: Feldgeräte
- 2: Speicherprogrammierbare Steuerung, PLC
- 3: Firewall
- 4: Betriebsnetzwerk
- 5: Switches
- 6: Metallgehäuse
- 7: Zugangsklappe
- 8: Durchführung
- 9: Modulträger
- 10, 10a, 10b: Leistungsversorgungsmodul
- 11, 11a: Ethernet-Gateway-Modul
- 14: Remote-I/O-System
- 16: Switch Modul
- 17: Modulträger
- 19a, b: Anschluss für die entsprechenden Leistungsversorgungsmodule
- 20: Leistungszuleitung
- 21a, 22a: Erster Port Ethernet-Gateway-Modul
- 21b , 22b: Zweiter Port Ethernet-Gateway-Modul
- 23a, 23b: Ethernet-Patch-Kabel
- 24a, 24b: Bussystem
- 25: Steuereinheit
- 26a, b, c, d: Steckplatz; Feldgerätanschluss
- 27a: Erster Port Switch Modul
- 27b: Zweiter Port Switch Modul
- 28a: Erster Port der Steuereinheit
- 28b: Zweiter Port der Steuereinheit
- 29: Kommunikations- und Datenaustauschkanal

## Patentansprüche

1. Station zum Einsatz in einem Feldnetz zwischen zumindest einem Feldgerät (1) und einer Zentraleinheit (2), wobei
die Station einen Modulträger (17) und darauf auswechselbar einsteckbare Module aufweist, wobei
zumindest eines der auswechselbar einsteckbaren Module als Switch-Modul (16) ausgebildet ist, an welches das zumindest eine Feldgerät (1) anschließbar ist, und wobei
zusätzlich zumindest eines der auswechselbar einsteckbaren Module als Leistungsversorgungsmodul (10a, 10b) ausgebildet ist, wobei
das zumindest eine Switch-Modul (16) zumindest einen APL-Ethernet-Port und/oder zumindest einen SPE-Ethernet-Port zum Anschließen des zumindest einen Feldgeräts (1) aufweist und wobei das Switch-Modul (16) derart konfiguriert ist das eine Spannungsversorgung des zumindest einen APL-Ethernet-Port und/oder zumindest einen SPE-Ethernet-Port über das Leistungsversorgungsmodul (10a, 10b) sichergestellt wird;
die Station derart konfiguriert ist, dass sie in einer explosiven Atmosphäre, insbesondere in einer Ex-Zone 1, einsetzbar ist.

2. Station nach Anspruch 1, **dadurch gekennzeichnet, dass** ferner zumindest eines der auswechselbar einsteckbaren Module als Ethernet-Gateway-Modul (11a) ausgebildet ist, über welches das Switch-Modul (16) an die Zentraleinheit (2) anbindbar ist.

3. Station nach Anspruch 1 oder 2, **dadurch gekennzeichnet, dass** zumindest zwei der auswechselbar einsteckbaren Module als Leistungsversorgungsmodule (10a, 10b) ausgebildet und so konfiguriert sind, dass eines der Leistungsversorgungsmodule (10a, 10b) ohne Unterbrechung des Betriebs der Station und der weiteren eingesteckten Module entfernt oder ausgetauscht werden kann.

4. Station nach einem der Ansprüche 1 bis 3, **dadurch gekennzeichnet, dass** die Station derart konfiguriert ist, dass eine Steuerung des Switch-Moduls (16) und ein Datenaustausch via dem Switch-Modul (16) mit dem oder den Feldgeräten (1) über ein Bussystem (24a, 24b) erfolgen.

5. Station nach einem der Ansprüche 1 bis 3, **dadurch gekennzeichnet, dass** die Station derart konfiguriert ist, dass eine Steuerung des Switch-Moduls (16) über ein Bussystem (24a, 24b) erfolgt und ein Datenaustausch via dem Switch-Modul (16) mit dem oder den Feldgeräten (1) über eine von dem Bussystem (24a, 24b) separierte Ethernet-Verbindung erfolgt.

6. Station nach Anspruch 5, **dadurch gekennzeichnet, dass** es sich bei der separierten Ethernet-Verbindung um ein Patch-Ethernet-Kabel handelt, das einen zweiten Port (21b) eines Ethernet-Gateway-Moduls (11a) mit einem ersten Port (27a) des Switch-Moduls (16) verbindet.

7. Station nach Anspruch 6, **dadurch gekennzeichnet, dass** das Switch-Modul (16) einen zweiten Port (27b) aufweist, über welches dieses mit einem weiteren Switch-Modul derselben Station verbunden ist.

8. Station nach einem der Ansprüche 5 bis 7, **dadurch gekennzeichnet, dass** die separierte Ethernet-Verbindung als eine Ringverbindung ausgebildet ist, in der mehrere Switch-Module derselben Station miteinander verbunden sind und das letzte der in Reihe geschalteten Switch-Module einen Port aufweist, über welchen die Station an die Zentraleinheit (2) angebunden ist und die Zentraleinheit (2) zudem an einen ersten Port eines Ethernet-Gateway-Moduls angebunden ist.

9. Station nach einem der vorherigen Ansprüche, **dadurch gekennzeichnet, dass** der Modulträger (17) eine Backplane aufweist, in welcher die Module einsteckbar sind; wobei optional eine Steuereinheit in der Backplane integriert ist, über welche eine Steuerung des Switch-Moduls (16) stattfinden kann.

10. Station nach Anspruch 9, **dadurch gekennzeichnet, dass** die Backplane zumindest zwei Ethernet-Ports aufweist, mit der die Steuereinheit an die Zentraleinheit (2) angebunden werden kann.

11. Station nach Anspruch 9 oder 10, **dadurch gekennzeichnet, dass** die Steuereinheit derart konfiguriert ist, dass eine Steuerung des Switch-Moduls (16) und ein Datenaustausch via dem Switch-Modul (16) mit dem oder den Feldgeräten (1) über ein Bussystem (24a, 24b) erfolgen.

12. Station nach einem der vorherigen Ansprüche, **dadurch gekennzeichnet, dass** mehrere Switch-Module (16) in der Station nebeneinander vorgesehen sind, welche in dem Modulträger (17) auswechselbar eingesteckt sind; und/oder dass maximal 16 Switch-Module (16) in der Station nebeneinander vorgesehen sind, wobei optional die mehreren Switch-Module (16) als Switch-Module derselben Bauart oder unterschiedlicher Bauart ausgebildet sind; und/oder dass
das Switch-Modul (16) zwischen zwei und sechs Feldgerätanbindungs-Ports aufweist, über welche jeweils ein Feldgerät (1) anbindbar ist.

## Claims

1. Station for use in a field network between at least one field device (1) and a central unit (2), wherein
the station has a module carrier (17) and modules that can be inserted into it in an exchangeable manner, wherein
at least one of the modules that can be inserted in an exchangeable manner is designed as a switch module (16) to which the at least one field device (1) can be connected, and wherein
at least one of the modules that can be inserted in an exchangeable manner is additionally designed as a power supply module (10a, 10b), wherein
the at least one switch module (16) has at least one APL Ethernet port and/or at least one SPE Ethernet port for connecting the at least one field device (1) and wherein the switch module (16) is configured in such a way that voltage supply to the at least one APL Ethernet port and/or at least one SPE Ethernet port by means of the power supply module (10a, 10b) is ensured;
the station is configured in such a way that it can be used in an explosive atmosphere, especially in an Ex Zone 1.

2. Station according to Claim 1, **characterized in that** at least one of the modules that can be inserted in an exchangeable manner is furthermore designed as an Ethernet gateway module (11a) by means of which the switch module (16) can be connected to the central unit (2).

3. Station according to Claim 1 or 2, **characterized in that** at least two of the modules that can be inserted in an exchangeable manner are designed as power supply modules (10a, 10b) and configured such that one of the power supply modules (10a, 10b) can be removed or replaced without interruption in operation of the station and the other inserted modules.

4. Station according to any of Claims 1 to 3, **characterized in that** the station is configured in such a way that the switch module (16) is controlled and data is exchanged via the switch module (16) with the field device or devices (1) by means of a bus system (24a, 24b).

5. Station according to any of Claims 1 to 3, **characterized in that** the station is configured in such a way that the switch module (16) is controlled by means of a bus system (24a, 24b) and data is exchanged via the switch module (16) with the field device or devices (1) by means of an Ethernet connection separated from the bus system (24a, 24b).

6. Station according to Claim 5, **characterized in that** the separated Ethernet connection is an Ethernet patch cable which connects a second port (21b) of an Ethernet gateway module (11a) to a first port (27a) of the switch module (16).

7. Station according to Claim 6, **characterized in that** the switch module (16) has a second port (27b) by means of which the switch module is connected to another switch module of the same station.

8. Station according to any of Claims 5 to 7, **characterized in that** the separated Ethernet connection is designed as a ring connection in which a plurality of switch modules of the same station are connected to each other and the last of the switch modules connected in series has a port by means of which the station is connected to the central unit (2) and the central unit (2) is additionally connected to a first port of an Ethernet gateway module.

9. Station according to any of the preceding claims, **characterized in that** the module carrier (17) has a backplane in which the modules can be inserted; wherein a control unit is optionally integrated in the backplane, it being possible for the switch module (16) to be controlled by means of the control unit.

10. Station according to Claim 9, **characterized in that** the backplane has at least two Ethernet ports by way of which the control unit can be connected to the central unit (2).

11. Station according to Claim 9 or 10, **characterized in that** the control unit is configured in such a way that the switch module (16) is controlled and data is exchanged via the switch module (16) with the field device or devices (1) by means of a bus system (24a, 24b).

12. Station according to any of the preceding claims, **characterized in that** a plurality of switch modules (16) are provided side by side in the station and inserted in the module carrier (17) in an exchangeable manner; and/or in that
a maximum of 16 switch modules (16) are provided side by side in the station, wherein the plurality of switch modules (16) are optionally designed as switch modules of the same or different type; and/or **in that**
the switch module (16) has between two and six field device connection ports by means of which a field device (1) can be connected in each case.

## Revendications

1. Station destinée à une utilisation dans un réseau de terrain entre au moins un appareil de terrain (1) et une unité centrale (2),
la station possédant un porte-module (17) et des modules pouvant être enfichés sur celui-ci de manière interchangeable,
au moins l'un des modules enfichables interchangeables étant réalisé sous la forme d'un module de commutation (16), auquel peut être raccordé au moins un appareil de terrain (1), et
en plus, au moins l'un des modules enfichables interchangeables étant réalisé sous la forme d'un module d'alimentation de puissance (10a, 10b),
l'au moins un module de commutation (16) possédant au moins un port Ethernet APL et/ou au moins un port Ethernet SPE pour le raccordement de l'au moins un appareil de terrain (1) et le module de commutation (16) étant configuré de telle sorte qu'une alimentation électrique de l'au moins un port Ethernet APL et/ou de l'au moins un port Ethernet SPE par le biais du module d'alimentation de puissance (10a, 10b) est garantie ;
la station étant configurée de telle sorte qu'elle peut être utilisée dans une atmosphère explosive, en particulier dans une zone Ex 1.

2. Station selon la revendication 1, **caractérisée en ce qu'**en plus au moins l'un des modules enfichables interchangeables est réalisé sous la forme d'un module de passerelle Ethernet (11a), par le biais duquel le module de commutation (16) peut être raccordé à l'unité centrale (2).

3. Station selon la revendication 1 ou 2, **caractérisée en ce qu'**au moins deux des modules enfichables interchangeables sont réalisés sous la forme de modules d'alimentation de puissance (10a, 10b) et configurés de telle sorte que l'un des modules d'alimentation de puissance (10a, 10b) peut être retiré ou remplacé sans interruption du fonctionnement de la station et des autres modules enfichés.

4. Station selon l'une des revendications 1 à 3, **caractérisée en ce que** la station est configurée de telle sorte qu'une commande du module de commutation (16) et un échange de données par le biais du module de commutation (16) avec le ou les appareils de terrain (1) soient effectués par le biais d'un système de bus (24a, 24b).

5. Station selon l'une des revendications 1 à 3, **caractérisée en ce que** la station est configurée de telle sorte qu'une commande du module de commutation (16) s'effectue par le biais d'un système de bus (24a, 24b) et un échange de données par le biais du module de commutation (16) avec le ou les appareils de terrain (1) s'effectue par le biais d'une connexion Ethernet distincte du système de bus (24a, 24b).

6. Station selon la revendication 5, **caractérisée en ce que** la connexion Ethernet distincte est un câble de brassage Ethernet qui relie un deuxième port (21b) d'un module de passerelle Ethernet (11a) à un premier port (27a) du module de commutation (16).

7. Station selon la revendication 6, **caractérisée en ce que** le module de commutation (16) possède un deuxième port (27b) par le biais duquel celui-ci est connecté à un module de commutation supplémentaire de la même station.

8. Station selon l'une des revendications 5 à 7, **caractérisée en ce que** la connexion Ethernet distincte est réalisée sous la forme d'une connexion en anneau dans laquelle plusieurs modules de commutation de la même station sont connectés ensemble et le dernier des modules de commutation branchés en série possède un port, par le biais duquel la station est raccordée à l'unité centrale (2) et l'unité centrale (2) est en plus raccordée à un premier port d'un module de passerelle Ethernet.

9. Station selon l'une des revendications précédentes, **caractérisée en ce que** le porte-module (17) possède une carte de fond de panier, dans laquelle les modules peuvent être enfichés ; une unité de commande étant intégrée en option dans la carte de fond de panier, par le biais de laquelle une commande du module de commutation (16) peut avoir lieu.

10. Station selon la revendication 9, **caractérisée en ce que** la carte de fond de panier possède au moins deux ports Ethernet avec lesquels l'unité de commande peut être raccordée à l'unité centrale (2).

11. Station selon la revendication 9 ou 10, **caractérisée en ce que** l'unité de commande est configurée de telle sorte qu'une commande du module de commutation (16) et un échange de données par le biais du module de commutation (16) avec le ou les appareils de terrain (1) soient effectués par le biais d'un système de bus (24a, 24b).

12. Station selon l'une des revendications précédentes, **caractérisée en ce que** plusieurs modules de commutation (16) sont prévus côte à côte dans la station, lesquels sont enfichés de manière interchangeable dans le porte-module (17) ; et/ou **en ce que**
un maximum de 16 modules de commutation (16) sont prévus côte à côte dans la station, les plusieurs modules de commutation (16) étant, en option, réalisés sous la forme de modules de commutation du même type ou de types différents ; et/ou **en ce que**
le module de commutation (16) possède entre deux et six ports de raccordement d'appareils de terrain, par le biais desquels peut respectivement être raccordé un appareil de terrain (1).
